# EUROPEAN PATENT SPECIFICATION

(11) **EP 3 736 145 B1**
(45) Date of publication and mention of the grant of the patent: **01.11.2023**
(21) Application number: 20172986.0
(22) Date of filing: 05.05.2020
(51) Int. Cl.: B60D 1/54

(54) **RETRACTABLE TOWING HOOK ARRANGEMENT**
EINZIEHBARE ANHÄNGEKUPPLUNG
AGENCEMENT DE CROCHET DE REMORQUAGE RÉTRACTABLE

(30) Priority: 09.05.2019 SE 1950560
(43) Date of publication of application: 11.11.2020
(73) Proprietor: Brink Towing Systems B.V., 7951 CX Staphorst (NL)
(72) Inventor: EISING, Frederik Jacob, 9415 PW Hijken (NL); BOVENKAMP, Bas Kasper, 8381 CH Vledder (NL)
(74) Representative: Valea AB

(56) References cited:
- EP-A1- 1 504 928
- EP-A1- 1 544 003
- EP-A1- 2 623 345
- EP-A2- 2 277 724
- DE-A1-102006 037 675
- DE-A1-102014 111 426

## Description

### TECHNICAL FIELD

The present disclosure relates to a retractable towing hook arrangement for a vehicle. The retractable towing hook arrangement is adapted to enable a towing hook, after being mounted to the vehicle, to be unlocked and displaced between a towing position and a retracted position during one continuous rotational movement.

### BACKGROUND

Towing hooks for towing towable or carryable objects, such as e.g. trailers or bike racks, are commonly used today on vehicles. In most cases a towing hook is mounted on the vehicle during the assembly process of the vehicle, although after sales mounting, e.g. by an authorized garage, is possible. For aesthetical and practical reasons it may be desirable to have a towing hook which can be displaced between a towing position and a retracted position. The retracted position may herein also be referred to as a stowed position. Generally such towing hooks are also referred to as retractable towing hooks.

There are several considerations when constructing a towing hook of the retractable kind. The available space in which a retractable towing hook arrangement can be mounted on a vehicle varies between different manufacturers and models. The rotation path, movement path or movement pattern, of the towing hook can be very space consuming and impart restrictions on the configuration of the towing hook. The towing hook should further, when in the retracted position, not be visible or at least not be clearly visible so as not to affect the aesthetic appearance of the vehicle. It is also important that the towing hook can be retracted to a position in which it is subjected to no or low risk of being damaged by the ground on which the vehicle rests or travels over, or by loose objects from the ground, such as e.g. debris, dirt or rubble.

Known retractable towing hooks are typically quite complex. One example of a retractable towing hook arrangement is disclosed in the European patent no. EP 2,875,972 B1. In order to displace the retractable towing hook arrangement in the mentioned patent between a towing position, sometimes referred to as an operative position, and a retracted position, sometimes referred to as an inoperative position, the towing hook has to perform a plurality of movements such as pivoting movements around two different pivot axes as well as rotational movement around a rotation axis. The towing hook arrangement further comprises a guide housing and a gate body, which guides and directs a movement of a coupling arm with respect to the guide housing and also the movement of the guide housing with respect to the vehicle holding body in order to activate or deactivate the pivot axes of the towing hook arrangement. Due to the amount of movable parts comprised in the retractable towing hook arrangement, the retractable towing hook arrangement in the mentioned patent is very complex and costly to manufacture. The amount of movable parts comprised in the solution according to the mentioned patent also makes it bulky and increases the risk of failure.

Patent document EP 1 504 928 A1 relates according to its abstract to a trailer hitch. A drive mechanism swivels a bar with a spherical end on bearings fixed on a vehicle by intermediate switching of a planetary gear system from a locked inactive position into a locked operating position and vice versa. On its free end away from the bar's bearing head, the bar supports a coupling ball and is allocated a locking pin to fasten and release a locking device.

### SUMMARY

It is thus an object of the present disclosure to provide a retractable towing hook arrangement which is simple and cost effective to manufacture and which reduces the space required for storing the towing hook arrangement on the vehicle.

This object is at least partly achieved by a retractable towing hook arrangement for a vehicle according to claim 1, the retractable towing hook arrangement comprising a towing hook for being connected to an object to be towed or carried, and a retracting assembly enabling said towing hook to be displaced in relation to a cross beam adapted for being mounted to the vehicle between a towing position and a retracted position when mounted to said vehicle. The retracting assembly comprises a first retracting member and a second retracting member. The first retracting member is connected to said towing hook and is arranged to be rotatably displaced around a rotation axis in relation to the cross beam, between the towing position and the retracted position. The second retracting member is arranged to rotate independently from the first retracting member between two engagement sections arranged at an angular distance from each other. The retractable towing hook arrangement further comprises a locking assembly being arranged to block a rotation of the first retracting member around the rotation axis. The second retracting member is configured to release the locking assembly during a first part of a rotational movement around the rotation axis, in which the engagement element moves between the engagement sections, to allow a rotation of the first retracting member around the rotation axis. The second retracting member is further configured to perform a rotation of the first retracting member around the rotation axis during a second part of the rotational movement in which the second retracting member has reached one of the engagement sections and is in operative engagement with the first retracting member.

By allowing the second retracting member to rotate independently of the first retracting member over an angular distance the second retracting member is able to perform an unlocking motion for unlocking the first retracting member before the second retracting member operatively engages and rotates the first retracting member. Since the first retracting member is locked in either the retracted or towing position, a fixed rotational connection between the second and first retracting member would not allow the second retracting member to rotate. In order for the second retracting member to rotate an additional actuator would be required for unlocking the locking assembly. Thus, the retractable towing hook arrangement according to the embodiments herein has the benefit that the number of actuators required for unlocking and displacing the towing hook can be reduced which further reduces the costs and packaging space required for the towing hook arrangement.

The locking assembly comprises a locking member being arranged to perform a translational movement along the rotation axis between a locking position and a releasing position. The locking member is adapted to prevent a rotational movement of the first retracting member around the rotation axis in the locking position. By being arranged to perform the translational movement the locking member can be displaced between the locking and releasing position in a simple manner using a limited number of moving parts.

In some embodiments the retracting assembly may further comprise a releasing member, being arranged on the locking member and in sliding contact with a surface of the second retracting member. The surface may extend in a plane perpendicular to the rotation axis. The surface of the second retracting member may comprise a cam shaped protrusion. The cam shaped protrusion may be arranged such that a rotation of the second retracting member relative to the first retracting member, between the two engagement sections, causes the releasing member to slide over the cam shaped protrusion of the second retracting member. This causes the releasing member to perform a translational movement along the rotation axis, thereby moving the locking member from the locking position to the releasing position. The cam shaped protrusion and the releasing member allow the rotational movement of the second retracting member during the independent rotation from the first retracting member, i.e. the first part of the rotational movement, to be translated to a translational movement of the releasing member. Thereby, a simple and cost efficient solution for unlocking the locking member is provided.

The releasing member may be connected to the locking member e.g. via a bolt. The releasing member may extend in a radial direction from the rotation axis, such as radially outwards, in order to engage the cam shaped protrusion which may be arranged over an angular section of the second retracting member and have an unrolling path which the releasing member slides over at a radial distance from the rotation axis. When the releasing member is connected to the locking member the locking member will also move in a translatory manner along the rotation axis from the locking position to the releasing position when the releasing member moves over the cam shaped protrusion. The cam shaped protrusion may be symmetrical in order to allow the releasing member to slide over the protrusion regardless of the direction of rotation of the second retracting member.

In some embodiments, when the engagement element of the second retracting member has reached one of the engagement sections connected to the first retracting member and engages with one of the engagement sections, the first retracting member is unlocked and follows the rotation of the second retracting member thereby displacing the first retracting member between the towing position and the retracted position. Thereby, the unlocking movement and displacing movement of the retractable towing hook arrangement may be performed in one single rotational movement by means of a single actuator, which is beneficial since the number of parts may be reduced which also reduces the cost and effort for manufacturing the retractable towing hook arrangement.

In some embodiments, the second retracting member may comprise a first engagement element and the first retracting member may be operatively connected to two engagement sections arranged at the angular distance from each other, or the second retracting member comprises two engagement sections arranged at the angular distance from each other and the first retracting member is operatively connected to the first engagement element. The first engagement element may be arranged to engage either one of the two engagement sections in order to drive the first retracting member. By providing two engagement sections at an angular distance from each other between which the engagement element can freely move, the independent rotation of the second retracting member for unlocking the first retracting member and the engagement of the second and first retracting members can be performed in a simple manner with a limited number of moving parts.

In some embodiments the retracting assembly may comprise a third retracting member being rotationally engaged with the first retracting member. The engagement sections or the first engagement element being operatively connected to the first retracting member may be arranged on the third retracting member. The third retracting member is arranged to engage with the second retracting member, such that when the second retracting member engages with the third retracting member the second retracting member drives the first retracting member via the third retracting member. Using a third retracting member has the benefit that a gearing may be introduced between the first and third retracting members.

In some embodiments, the first and the third retracting members may be rotationally engaged using for example, but not limited to, a gear wheel or a friction wheel. The gear wheel or friction wheel may have its rotation axis in a direction being perpendicular to the rotation axis.

In some embodiments, the first and the third retracting members each comprise a circumferential gear track arranged on a respective surface of the first and the third retracting members, such that the gear tracks of the respective surfaces of the first and third retracting members face each other. The retracting assembly may further comprise one or more gear wheels being in engagement with the respective gear track of the first and the third retracting members, such that a rotation of the third retracting member is translated to the first retracting member via the gear tracks and the one or more gear wheels. Thereby the rotational movement of the second retracting member can be transferred past rotationally fixed components such as e.g. a mounting bracket for mounting the retracting assembly to the tow bar, which can be therefore constructed more cost effective and stronger. Furthermore, the gear ratio between the first and the third retracting members may be adapted in order to allow the revolutions of the first retracting member to be different than the second retracting member. Thereby the end positions of the towing hook may be adapted.

In some embodiments the first engagement element may be a pin protruding from one of the retracting members in a direction parallel to the rotation axis. The pin may be arranged to engage into a groove arranged on a retracting member arranged opposite of the retracting member comprising the pin. The groove may extend partly circumferentially over a first circle sector and the end sections of the groove may constitute the engagement sections, such that the pin is arranged to move along the groove between a first and a second end section of the groove when the second retracting member is rotated without driving the first retracting member and is arranged to drivingly engage the first retracting member when the pin reaches the first or the second end section of the groove. The groove may span an angular sector of 180°.By having the end sections of the groove constitute the engagement sections and the engagement element protrude into the groove, the space required for the engagement sections and the engagement element in the direction of the rotation axis is similar to the thickness of the retracting members. Hence, the size of the retracting assembly may be reduced in comparison to an embodiment where the engagement sections protrude from the retracting members in a direction parallel to the rotation axis. Thereby the size of the retracting assembly may be reduced, since the protruding engagement element may be inserted into the groove rather than having both the engagement element and the engagement sections protrude in a direction parallel to the rotation axis. Furthermore, since the point of engagement between the engagement sections and the engagement element can be moved closer to the centers of the retracting members, the torque acting on the retracting member can be reduced. This reduces the risk of failure of the retracting members and the engagement sections and the engagement element.

The first retracting member comprises two or more receiving portions for receiving one or more locking elements. One or more first receiving portions are arranged to receive the one or more locking elements in the towing position and one or more second receiving portions are arranged to receive the one or more locking elements in the retracted position. The one or more locking elements are released from engagement with the first retracting member when the locking member is in the releasing position. This allows the first retracting member, and thus the towing hook, to be secured in both the retracted and the towing position.

The retractable towing hook arrangement further comprises a carrying unit being fixedly arranged to the cross beam, wherein the first retracting member is rotatably arranged to the carrying unit.

The carrying unit is further configured to carry the one or more locking elements and to receive the locking member, such that the locking elements are movably arranged in a radial and axial direction to engage the first retracting member when the locking member is in the locking position and to disengage the first retracting member when the locking member is in the releasing position.

The locking elements may be movably arranged in a substantially radial direction to engage the first retracting member when the locking member is in the locking position and to disengage the first retracting member when the locking member is in the releasing position. The one or more locking elements may be arranged at an angle α_{LE} to the rotation axis, such that the one or more locking elements move both in a direction of the rotation axis and radially outwards from the rotation axis, when the one or more locking elements are displaced by means of the locking member. The locking elements may e.g. have a cylindrical shape with a centre axis extending at the angle α_{LE} to the rotation axis of the retracting arrangement such that the centre axis extends in parallel with the circumferential surface of the wedge shaped section of the locking member. This ensures that the locking elements can slide over the wedge shaped portion smoothly when the locking member performs the translational movement along the rotation axis between the locking position and the releasing position.

In some embodiments, the locking member is preloaded towards the locking position. Thereby the locking member will be forced to enter the locking position once the first retracting member has reached either the retracted or the towing position and will ensure that the first retracting member is not unintentionally displaced into the releasing position.

In some embodiments, the retracting assembly may comprise an actuator for performing the rotational movement of the second retracting member. Thereby a fully automatic unlocking and displacement of the towing hook can be provided.

The embodiments herein further relate to a vehicle comprising the retractable towing hook arrangement as disclosed herein.

In some embodiment, the retracting assembly may be positioned at an angle to a longitudinal plane of the vehicle between 1 and 90°.

The embodiments herein all improve the packaging size and reduce the number of components required for unlocking and displacing the towing hook significantly in comparison to known retractable towing hook arrangements. By reducing the number of components the cost for producing the retractable towing hook arrangement and the risk of failure of the retractable towing hook arrangement can be reduced.

### BRIEF DESCRIPTION OF THE DRAWINGS

Non-limiting embodiments of the present invention will be described in greater detail with reference to the accompanying figures in which;
figure 1a shows a retractable towing hook arrangement according to embodiments herein in a towing position on a vehicle;
figure 1b shows a retractable towing hook arrangement according to embodiments herein in a retracted position on the vehicle;
figure 2a shows an exploded view of a portion of the retractable towing hook arrangement in the form of a retracting assembly according to a first embodiment herein;
figure 2b shows an exploded view of a portion of the retractable towing hook arrangement in the form of a retracting assembly according to a second embodiment herein;
figure 3 shows a second retracting member comprising a cam shaped protrusion and a releasing member for releasing a locking member according to embodiments herein; figure 4a show the second retracting member comprising the cam shaped profile according to embodiments herein seen in the direction of the rotation axis;
figure 4b shows the movement of the releasing member over the cam shaped protrusion during rotation of the second retracting member;
figure 5 shows an assembled view of the retracting assembly indicating cut through sections of the towing hook assembly shown in greater detail in figures 6 to 8;
figure 6 shows a cut through of an interaction section between the retracting members along the line CONNECTION-CONNECTION as indicated in figure 5;
figure 7a shows the interaction section of figure 6 during displacement from the retracted position to the towing position;
figure 7b shows the shows the interaction section of figure 6 during displacement from the towing position to the retracted position;
figure 8 shows a cut through of a locking assembly according to embodiments herein along the line LOCK-LOCK as indicated in figure 5.

### DETAILED DESCRIPTION OF EMBODIMENTS

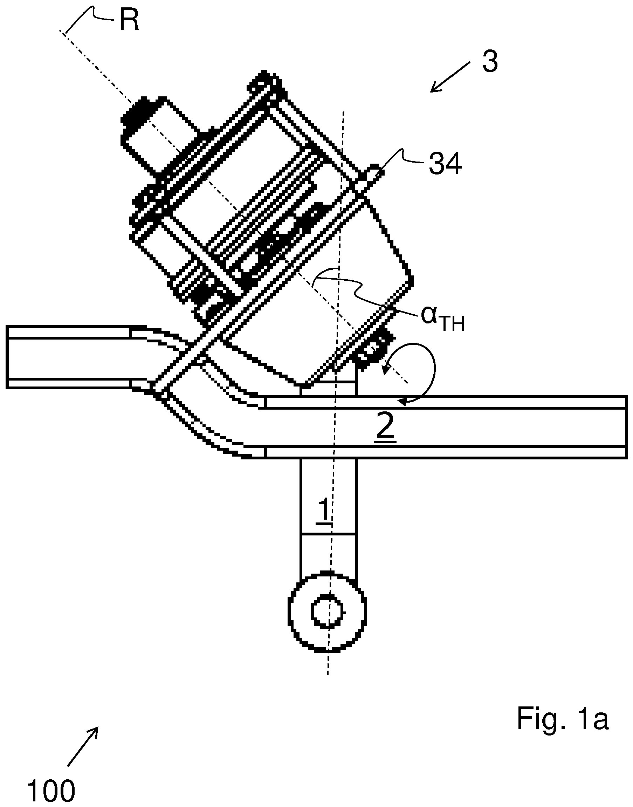

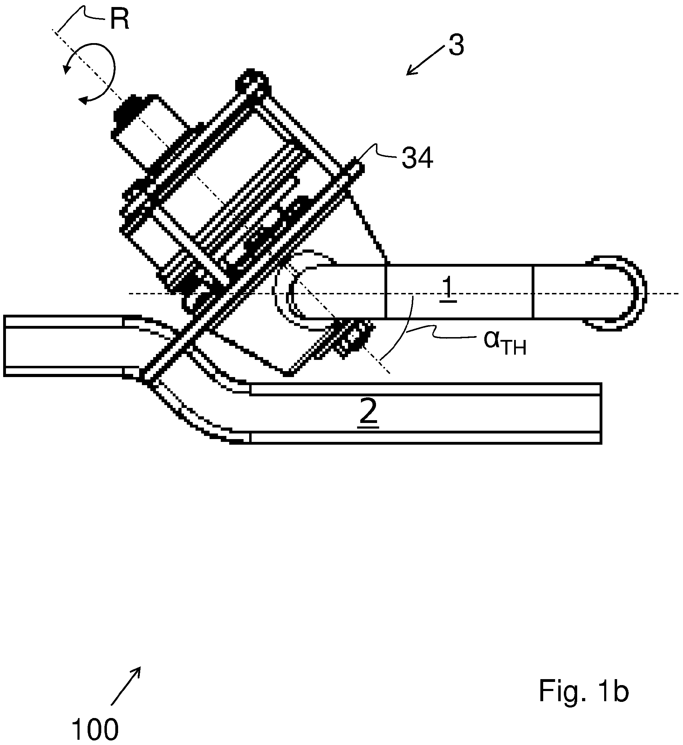

**Figure 1a** **and** **1b** show a retractable towing hook arrangement 100 for a vehicle according to embodiments herein. The towing hook arrangement 100 comprises a towing hook 1 for being connected to an object to be towed or carried, a cross beam 2 adapted for being mounted to the vehicle and a retracting assembly 3 enabling said towing hook 1 to be displaced in relation to the cross beam 2 between a towing position (shown in figure 1a) and a retracted position (shown in figure 1b) when mounted to said vehicle. The towing hook 1, in the shown non-limiting embodiment, can be displaced between a towing position, shown in figure 1a, and a retracted position, shown in figure 1b. In the towing position, a towable or carryable object may be attached to the towing hook 1 after which the vehicle can tow or carry the towable or carryable object. In the retracted position, the towing hook 1 may be positioned behind a rear bumper of the vehicle and may at least partly be concealed from view by the rear bumper of the vehicle. The towing hook 1 is enabled to be displaced between the towing position and the retracted position by means of the retracting assembly 3. The towing hook 1 may comprise a ball portion adapted to be connected with the towable or carryable object. The retractable towing hook arrangement may further comprise a mounting bracket 34 for mounting the retracting assembly 3 to the cross beam 2.

The retracting assembly 3 comprises a first retracting member 31 and a second retracting member 32. The first retracting member 31 is connected to said towing hook 1 and is arranged to be rotatably displaced around a rotation axis R in relation to the cross beam 2 between the towing position and the retracted position. The second retracting member 32 is arranged to rotate independently from the first retracting member 31 between two engagement sections arranged at an angular distance from each other. This is further described below.

The retractable towing hook arrangement 100 further comprises a locking assembly being arranged to block a rotation of the first retracting member 31 around the rotation axis R. The second retracting member 32 is configured to release this locking assembly during a first part of a rotational movement around the rotation axis in which an engagement element moves between the engagement sections, to allow a rotation of the first retracting member 31 around the rotation axis R, and to perform a rotation of the first retracting member 31 around the rotation axis R during a second part of the rotational movement in which the second retracting member 32 has reached one of the engagement sections and is in operative engagement with the first retracting member 31. This is further described below.

The towable or carryable object may be any towable or carryable object which is specifically adapted to be mounted on a towing hook or an equivalent element. Such towable or carryable objects can generally be divided into two sub categories. Firstly; pivotable towable objects such as a trailer, a caravan, a boat trailer, a cargo trailer, or similar. Pivotable towable objects rely on the towing hook to pull or push the pivotable towable object, while the pivotable towable object itself generally tend to have at least one ground supporting element such as wheels or skis or the like. The towing hook does not carry the full weight of a pivotable towable object. A pivotable towable object is further enabled to pivot about the towing hook and is thus relying on the mobility of the connection to the towing hook in order to be towed in a safe and convenient manner. Secondly; the towable or carryable object can be a carried accessory such as a bike carrier, a luggage carrier, a towing hook protection member or the like. Towing hook accessories are generally fixed to the towing hook and rely on that the towing hook, or the equivalent element, is carrying the full weight of the towing hook accessory. Although some load relief may sometimes be provided by the vehicle itself, a carried accessory does not have ground supporting elements such as wheels or skis or the like.

The towing hook 1 has a main extension in a main towing hook plane, wherein the main towing hook plane, when the towing hook is in the towing position, extends in parallel with a vertical longitudinal plane of the vehicle, which may also be referred to as a Y-plane of the vehicle. The towing hook 1 may further be arranged on the first retracting member 31 such that the main towing hook axis is arranged at an angle α_{TH} in a range of 1-90° to the rotation axis R. In one embodiment the towing hook 1 may further be arranged on the first retracting member 31 such that the main towing hook plane is arranged at an angle α_{TH} of 45° to the rotation axis. This embodiment has the benefit that, when the retractable towing hook arrangement 10 is mounted on the vehicle and the first retracting member 31 is rotated 180° around the rotation axis from the towing position to the retracted position, the towing hook 1 pivots in such a way that the main towing hook plane moves from being parallel to the vertical longitudinal plane of the vehicle to being parallel to a vertical transverse plane, which may also be referred to as a X-plane of the vehicle. This has the benefit that the towing hook 1 has its main extension in the longitudinal direction of the vehicle when the towing hook 1 is in the towing position, such as shown in figure 1a, but has its main extension parallel to the cross beam 2 and/or an inner surface of the rear bumper of the vehicle in the retracted position, as shown in Figure 1b. This reduces the space required for storing the towing hook 1 behind the rear bumper, when the towing hook is in the retracted position. The embodiments herein thus also relate to a vehicle comprising the towing hook arrangement according to the embodiments herein.

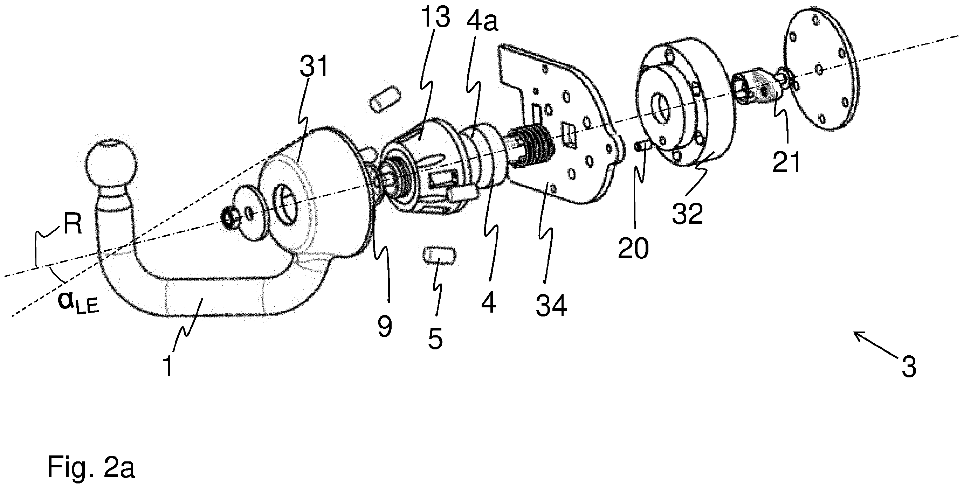

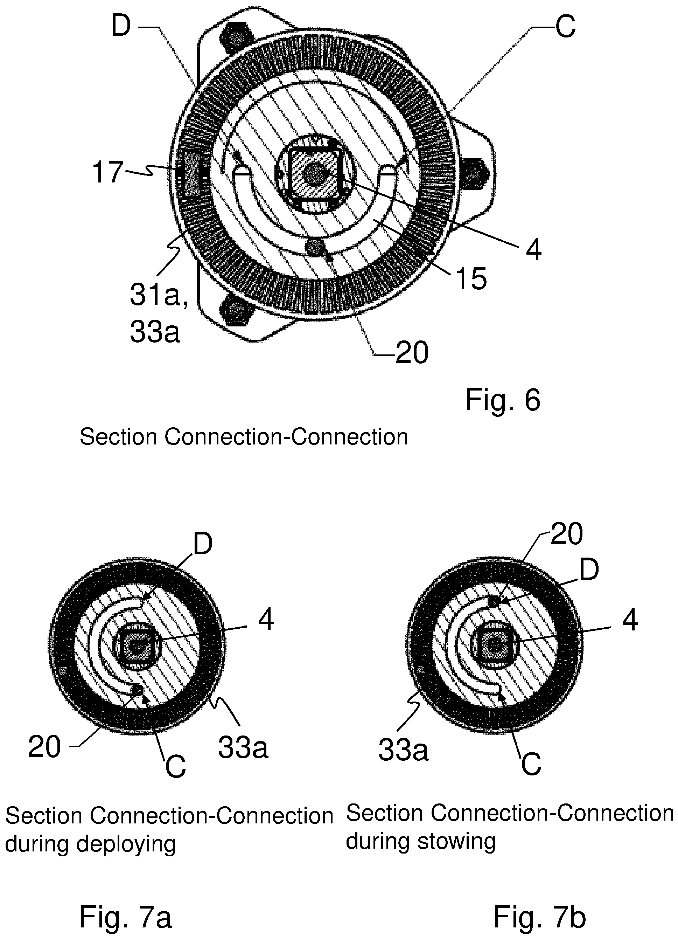

**Figure 2a** shows an exploded view of the retracting assembly 3 according to a first exemplary embodiment herein. In this embodiment the retracting assembly 3 comprises a first retracting member 31 and a second retracting member 32. The first and the second retracting members 31, 32 are rotatably arranged relative to each other around the rotation axis R over an angular sector of a revolution. Over this angular sector the second retracting member 32 can rotate freely without the first retracting member 31 following this rotation. In other words the first retracting member 31 remains stationary while the second retracting member 32 rotates. The first retracting member 31 is further connected to the towing hook 1. The towing hook 1 may e.g. be connected to the first retracting member 31 by welding or may be removably connected to the first retracting member 31, e.g. by means of a bolt, a screw or a nut. The towing hook 1 may also be constructed as one part with the first retracting member by e.g. forging or casting. The first retracting member 31 is arranged to be rotatably displaced in relation to the cross beam 2 around the rotation axis R, between the towing position and the retracted position. The second retracting member 32 may comprise the engagement element 20 being arranged to translate a rotation of the second retracting member 32 to a rotation of the first retracing member 31. The engagement element 20 of the second retracting member 32 may in some embodiments comprise a pin protruding from the second retracting member 32 in a direction parallel to the rotation axis R. The engagement element 20 such as e.g. the pin, is arranged to drivingly engage with the first retracting member 31. The first retracting member 31 may be connected to two engagement sections (not shown in figure 2a) arranged at an angular distance from each other. The engagement element 20 may be arranged to engage either of the engagement sections connected to the first retracting member 31 in order to drive the first retracting member 31. The engagement element 20 is further arranged to move independently from the first retracting member 31 between the two engagement sections. The engagement sections may e.g. be end sections of a partly circumferential groove 15 extending over a first circle sector of the first retracting member 31. The engagement sections will be described in further detail in relation to figures 6, 7a and 7b.

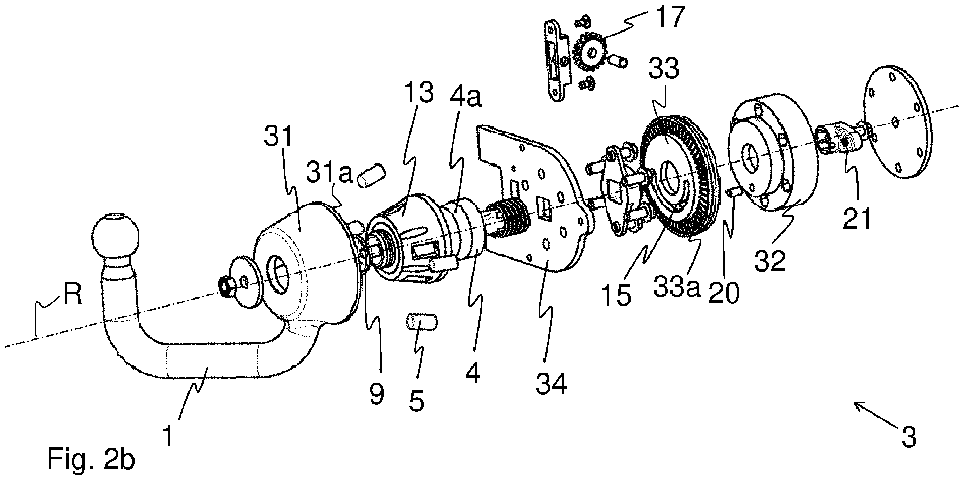

The retracting assembly 3 according to the embodiment shown in figure 2a further comprises a locking assembly for blocking the rotation of the first retracting member 31 around the rotation axis R. The locking assembly comprises a locking member 4 being arranged to perform a translational movement along the rotation axis R between a locking position and a releasing position. The locking member 4 is adapted to prevent a rotational movement of the first retracting member 31 around the rotation axis R when the locking member 4 is in the locking position. In the exemplary embodiments shown in Figures 2a and 2b the locking assembly further comprises a plurality of locking elements 5. The first retracting member 31 comprises two or more receiving portions for receiving one or more locking elements 5. The two or more receiving portions are arranged to receive the one or more locking elements 5. One or more first receiving portions are arranged to receive the one or more locking elements 5 when the first retracting member 31 is in the towing position and one or more second receiving portions are arranged to receive the one or more locking elements 5 when the first retracting member 31 is in the retracted position. In a further embodiment however, the locking member 4 may itself be adapted to lock the rotation of the first retracting member 31. The locking member 4 may be preloaded towards the locking position by means of a preloading element, such as e.g. a spring. The preloading element may be arranged between the locking member 4 and a mounting bracket 34 being connected to the cross beam 2.

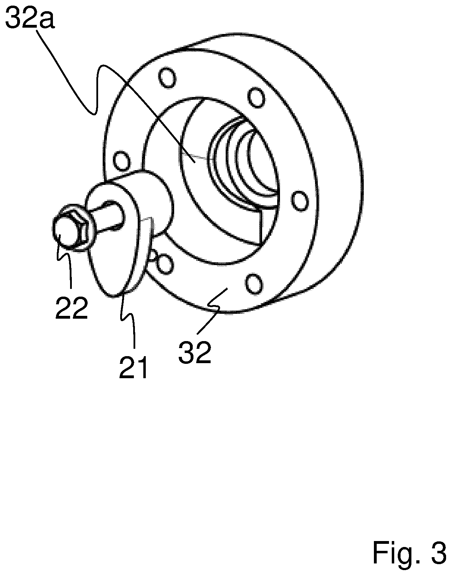

The retracting assembly 3 may further comprise a releasing member 21 being arranged on a locking member 4 and being in sliding contact with a surface (not shown in figure 2a) of the second retracting member 32, wherein the surface extends in a plane perpendicular to the rotation axis R, when the retracting assembly 3 is in an assembled state. The surface of the second retracting member 32 is configured to translate the rotation of the second retracting member 32 to a translatory movement of the releasing member 21 in the direction of the rotation axis R. As a consequence, the locking member 4 will follow the translational movement of the releasing member 21 and move into the releasing position. The surface of the second retracting member 32 may e.g. comprise a cam shaped protrusion over which the releasing member may slide in order to perform the translatory movement. The second retracting member 32 and the cam shaped protrusion 32a will be described in further detail in relation to figure 3.

When the towing hook 1 is in a locked state, either in the retracted position or in the towing position, one or more of the one or more receiving portions may be occupied by the one or more locking elements 5. In some embodiments each of the receiving portions may be occupied by a respective locking element 5. The receiving portions may be arranged symmetrically in the first retracting member 31, which allows for a 180° rotation of the first retracting member 31 between the retracted and the towing position. When the towing hook 1 has reached either the retracted or the towing position, the locking elements 5 may be pushed into the receiving portions of the first retracting member 31 by means of the locking member 4. Preferably the locking member 4 may comprise a conical or wedge shaped section 4a which facilitates the engagement of the locking member 4 with the first retracting member 31 and/or the locking elements 5. The wedge shaped section 4a comprises a circumferential surface being arranged at an angle α_{LE} to the rotation axis R.

The retractable towing hook arrangement further comprises a carrying unit 13 being fixedly arranged to the cross beam 2, wherein the first retracting member 31 is rotatably arranged to the carrying unit 13. The carrying unit 13 may e.g. be arranged to the cross beam 2 by being attached to the mounting bracket 34. The carrying unit 13 may comprise a bearing element which functions as a bearing for the first retracting member 31 for rotatably mounting the first retracting member 31 to the carrying unit 13. The first retracting member 31 may be attached to a carrying unit 13 by a fastening element, such as e.g. a lock nut. The carrying unit 13 is further configured to carry the one or more locking elements 5 and to receive the locking member 4. The locking elements 5 may be movably arranged in a substantially radial direction to engage the first retracting member 31 when the locking member 4 is in the locking position and to disengage the first retracting member 31 when the locking member 4 is in the releasing position. The one or more locking elements 5 may be arranged at an angle α_{LE} to the rotation axis, such that the one or more locking elements 5 move both in a direction of the rotation axis R and radially outwards from the rotation axis R, when the one or more locking elements 5 are displaced by means of the locking member 4. The locking elements may e.g. have a cylindrical shape with a centre axis extending at the angle α_{LE} to the rotation axis R of the retracting arrangement such that the centre axis extends in parallel with the circumferential surface of the wedge shaped section 4a of the locking member 4. This ensures that the locking elements 5 can slide over the wedge shaped portion 4a smoothly when the locking member 4 performs the translational movement along the rotation axis R between the locking position and the releasing position.

The retracting assembly according to the embodiments herein allows the unlocking and the rotation of the towing hook 1 to be performed during one continuous rotation of the second retracting member 32. By performing the unlocking during a first part of the rotational movement of the second retracting member 32 prior to the displacement of the first retracting member 31, the locking member 4 is completely displaced into the releasing position before the displacement of the first retracting member 31 and the towing hook 1 mounted thereon is performed. The benefit of this is that there cannot be a displacement of the towing hook before the unlocking of the locking members has been completed and therefore no force can be exerted onto the displacement before the unlocking has been completed. Thereby wear of the locking member 4 and the locking elements 5 may be reduced in comparison to a solution where an unlocking motion and displacing motion is performed simultaneously. This solution is therefore less subjected to failures.

The first retracting member 31 and the carrying unit 13 may respectively have the shape of a truncated cone. The first retracting member 31, the carrying unit 13 and the locking member 4 may be concentrically arranged with the rotation axis R being the common center line. In this embodiment, the first retracting member 31 may be rotationally mounted to the carrying unit 13 such that it covers the carrying unit 13 and may act as a housing for the carrying unit 13 and/or the locking member 4. The locking member 4 may be slidably arranged along the rotation axis R inside the carrying unit 13. In order to prevent dirt and moisture from entering the first retracting member 31 and the carrying unit 13 may be sealed by means of a sealing element, such as e.g. an O-ring 9. When the retracting assembly 3 comprises the one or more locking elements 5, the locking elements 5 may be arranged in slots located on the conical surface of the carrying unit 13 and may be arranged to move inwards and/or outwards in relation to the carrying unit 13 in a direction perpendicular to the conical surface of the carrying unit 13. In other words the locking elements 5 may be arranged at an angle α_{LE} to the rotation axis corresponding to a half-angle of the truncated cone.

**Figure 2b** shows the retracting assembly 3 according to a second exemplary embodiment herein. In this second embodiment shown in figure 2b the retracting assembly may further comprise a third retracting member 33. The third retracting member 33 may be rotationally fixed to the first retracting member 31 and the groove 15 may be arranged on the third retracting member 33. The engagement element 20, in this embodiment shown as a pin, is arranged to move along the groove 15 between a first and second end section of the groove 15 without driving the third retracting member 33 and drivingly engage the third retracting member 33 when the engagement element 20 reaches the first or the second end section of the groove 15. The first and the second end sections of the groove 15 may act as engagement sections.

The first and the third retracting members 31, 33 may each comprise a circumferential gear track 31a, 33a arranged on a respective surface of the first and the third retracting members 31, 33, such that the gear tracks 31a, 33a of the respective surfaces of the first and third retracting members 31, 33 face each other. The retractable towing hook arrangement may further comprise one or more gear wheels 17 being in engagement with the respective gear track of the first and the third retracting members, such that a rotation of the third retracting member 33 is translated to the first retracting member 31 via the gear tracks 31a, 33a and the one or more gear wheels 17. In the illustrated embodiment, the gear wheel 17 has its rotation axis in a direction being perpendicular to the rotation axis R. The retracting members 31, 32, 33 are rotatably arranged around the rotation axis R but are fixed from movement in a longitudinal direction of the rotation axis R in all of the embodiments disclosed herein. The releasing member 21 and the locking member 4 may be rotationally fixed to the mounting bracket 34 and/or the carrying unit 13 and displaceable in the longitudinal direction of the rotation axis R. Due to the rotatably fixed arrangement of the locking member 4, a rotation of the first retracting member 31 will be prevented when the first retracting member 31 and the locking member 4 are in engagement, either directly or via the locking elements 5 and/or the carrying unit 13.

During the displacement of the towing hook, the first 31, second 32 and/or third 33 retracting members are fixed in an axial direction and radial direction and only perform a rotating movement around the rotation axis R.

**Figure 3** shows the second retracting member 32 according to embodiments herein. The second retracting member 32 comprises a cam shaped protrusion 32a arranged on a surface of the second retracting member 32 which extends in a direction perpendicular to the rotation axis R, when the retracting assembly is in an assembled state. The second retracting member 32 is rotatable in relation to the releasing member 21. The cam shaped protrusion 32a is arranged such that a rotation of the second retracting member 32 between the engagement sections of the first retracting member 31 causes the releasing member 21 to slide over the cam shaped protrusion of the second retracting member 32. This sliding movement of the releasing member 21 over the cam shaped protrusion 32a causes the releasing member 21 to perform a translational movement along the rotation axis. The releasing member 21 may be connected to the locking member 4 e.g. via a bolt 22. The releasing member 21 may extend in a radial direction from the rotation axis R, such as radially outwards, in order to engage the cam shaped protrusion 32a which may be arranged over an angular section of the second retracting member 32 and have an unrolling path which the releasing member 21 slides over at a radial distance r₃₂ₐ from the rotation axis R. When the releasing member 21 is connected to the locking member 4 the locking member 4 will also move in a translatory manner along the rotation axis R from the locking position to the releasing position when the releasing member 21 moves over the cam shaped protrusion 32a. The cam shaped protrusion 32a may be symmetrical in order to allow the releasing member 21 to slide over the protrusion 32a regardless of the direction of rotation of the second retracting member 32.

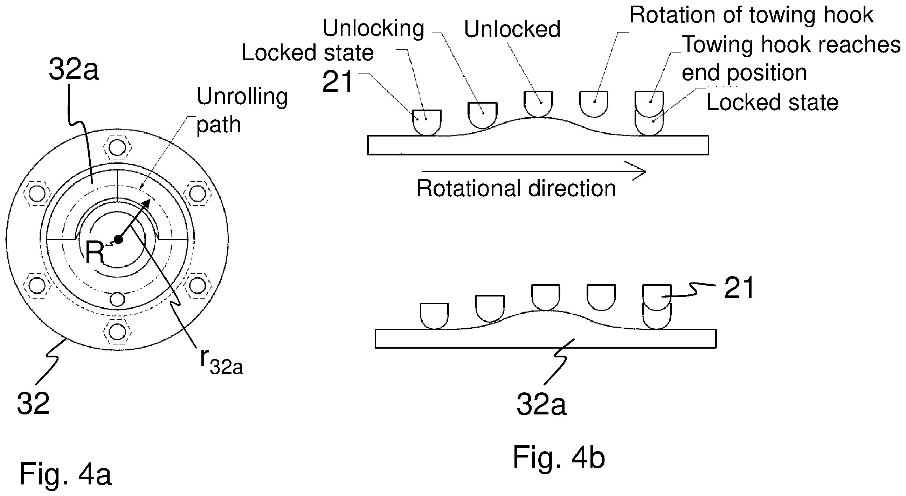

**Figure 4a** shows the second retracting member 32 comprising the cam shaped protrusion 32a seen in the direction of the rotation axis R. The cam shaped protrusion 32a is arranged over a part of the circumference of the second retracting member 32. As can be seen in figure 4a the cam shaped protrusion 32a is symmetrical, thereby allowing the releasing member 21 to perform an identical movement regardless of the direction of rotation of the second retracting member 32. The movement of the releasing member 21 will be further described with regards to figure 4b. The cam shaped protrusion 32a may e.g. extend over an angular segment of 90° to 270° of the circumference of the second retracting member 32. In some further embodiments the cam shaped protrusion 32a may extend over an angular segment of 180° of the circumference of the second retracting member 32.

**Figure 4b** discloses the movement of the releasing member 21 over the cam shaped protrusion 32a of the second retracting member 32 when the second retracting member 32 rotates in relation to the first retracting member 31 between the engagement sections C, D. The releasing member 21, which is fixed in relation to the mounting bracket 34 and or the carrying unit 13 such that it moves relative to the second retracting member 32 when the second retracting member 32 rotates around the rotation axis R, follows the cam shaped protrusion 32a as the cam shaped protrusion 32a passes along the position of the releasing member 21. When the releasing member 21 reaches the cam shaped protrusion 32a it starts to climb the cam shaped protrusion 32a which causes the releasing member 21 to perform a translational movement in the direction of the rotation axis R. Since the releasing member 21 is connected to the locking member 4 when the retracting assembly is in an assembled state, the locking member 4 will follow the releasing member 21 and will start an unlocking motion. When the locking member 4 is preloaded, this movement will counteract the preloading force acting on the locking member 4. In order to reduce friction between the releasing member 21 and the cam shaped protrusion 32a, the releasing member 21 may comprise a rolling element (not shown), such as a ball, which acts as a contact point between the releasing member 21 and the cam shaped protrusion 32a.

When the releasing member 21 has reached the highest point of the cam shaped profile 32a the locking member 4 will be completely retracted and the first retracting member 31 will be unlocked and will be able to perform the rotating movement for displacing the first retracting member 31, as well as the towing hook 1 connected to the first retracting member 31, between the towing position and the retracted position. The dimensions of the cam shaped profile 32a may be chosen such that they allow the locking member 4 to be retracted and to fully unlock the first retracting member 31 prior to the rotation of the first retracting member. After the first retracting member 31 has been unlocked, a continued rotation of the second retracting member 32 will cause the second retracting member 32 to engage the first retracting member 31, either directly or via the third retracting member 33, which will cause the first retracting member 31 to follow the rotation of the second retracting member 32. Hence, the unlocking movement may be fully completed prior to performing the displacement of the first retracting member 31. The common rotation of the retracting members 31, 32, 33 will continue until the first retracting member 31 reaches one of the end position, such as the retracted or the towing position. In the end position, the locking member 4 will be forced back into the locking position by means of the preloading force. As can be seen in figure 4b, the releasing member 21 stays in a retracted/unlocked position during the rotation of the first retracting member 31 and translates back to the locked position when the first retracting member reaches the end position.

When the locking assembly comprises one or more locking elements 5, the locking elements 5 may retract from the receiving portions in the first retracting member 31 during the unlocking motion. In the unlocked state and during the rotation of the first retracting member 31, the locking elements 5 may abut an inner surface of the first retracting member 31 which prevents the locking member 4 from returning to the locking position. This can be seen in figure 4b as the releasing member 21 losing contact with the cam shaped protrusion during the rotation of the first retracting member and the towing hook 1. When the first retracting member 31 and the towing hook 1 reach the end position the locking elements 5 may be pushed into the receiving portions in the first retracting member 31 by the locking member 4, which then allows the first retracting member 31 to return to the locked position and the releasing member 21 to perform a translational movement along the rotation axis R and return into sliding contact with the second retracting member 32.

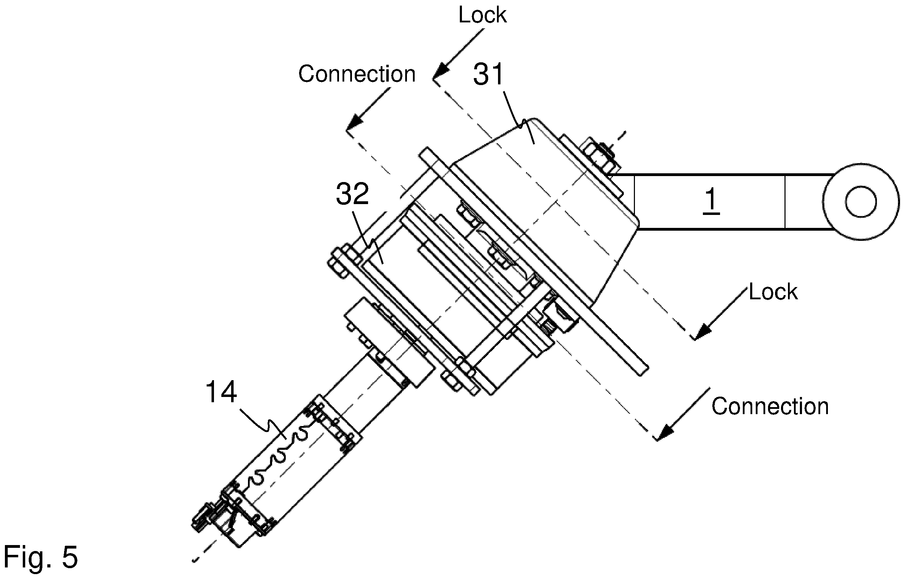

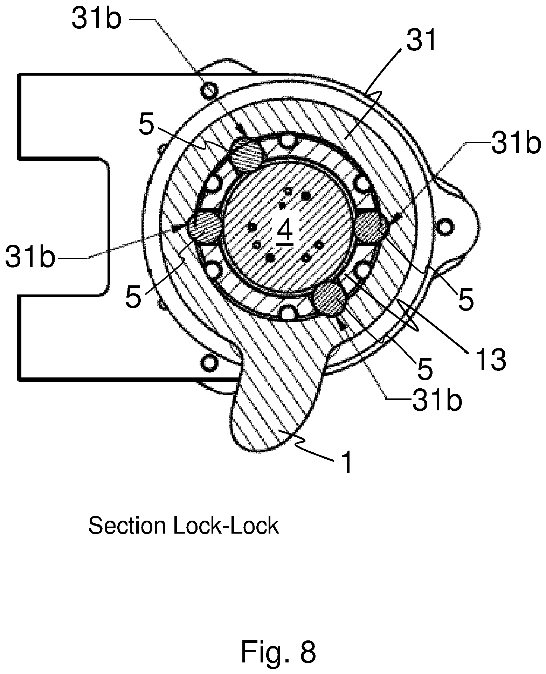

**Figure 5** shows the retracting assembly 3 of figure 2b in an assembled state. In the following, a first embodiment of an engagement section between the second retracting member 32 and the first or the third retracting member 31, 33 will be described with relation to figures 6, 7a and 7b, seen as a cut through along the line CONNECTION-CONNECTION, and a first embodiment of the locking assembly will be described with relation to figure 8, seen as a cut through along the line LOCK-LOCK in figure 5. The retracting assembly 3 may further comprise an actuator 14 for performing the rotational movement of the second retracting member 32. The actuator may e.g. be an electrical motor, a hydraulical motor for automatic actuation of the rotational movement or a pull cable for manual actuation of the rotational movement of the second retracting member.

**Figure 6** shows the interaction between the second retracting member 32 and the first retracting member 31. The engagement element 20 of the second retracting member 32 is arranged to translate a rotation of the second retracting member 32 to a rotation of the first retracting member 31 when the engagement element 20 is in engagement with a first engagement section C or a second engagement section D connected to the first retracting member 31. The engagement sections C, D are arranged at a distance from each other. The engagement element 20 may further be configured to rotate independently from the first retracting member 31 when the engagement element 20 moves between the first and the second engagement sections C, D. The engagement sections C, D may e.g. be protrusions extending from a surface of the first or the third retracting members 31, 33, which surface extends in a plane perpendicular to the rotation axis R. This may be achieved by either the first or the third retracting member 31, 33 comprising the engagement sections C, D. Alternatively, the engagement sections C, D may e.g. be end sections of a groove 15 being arranged on the first or the third retracting member 31, 33. The groove 15 is arranged such that the engagement element 20 can move independently from the first retracting member, when the engagement element 20 moves through the groove 15 between the end sections. When the engagement element 20 reaches the end section of the groove 15 the engagement element 20 will be in rotational engagement with either one of the engagement sections C, D, depending on the direction of rotation, and will thus cause a rotation of the first or third retracting member 31, 33 around the rotation axis R. The engagement element 20 is arranged to engage into the groove 15 and the first retracting member 31 is connected to the two engagement sections C, D arranged at a distance from each other. The engagement element 20 is arranged to engage either of the engagement sections C, D connected to the first retracting member 31 in order to drive the first retracting member 31 and is arranged to move independently from the first retracting member 31 between the two engagement sections C, D. The end sections of the groove 15 may constitute the engagement sections C, D connected to the first retracting member 31. When the engagement element 20 of the second retracting member 32 has reached one of the engagement sections C, D connected to the first retracting member 31 and engages with the one of the engagement sections C, D, the first retracting member 31 is already unlocked since the locking member 4 has been retracted by means of the cam shaped protrusion 32a of the second retracting member 32 during the movement of the engagement element 20 between the engagement sections C, D and can therefore follow the rotation of the second retracting member 32. This will cause the first retracting member 31 to be displaced between the towing position and the retracted position. In the embodiment shown in figure 6 the engagement sections C, D are arranged on the third retracting member 33. In order to drive the first retracting member 31, the first retracting member 31 and the third retracting member 33 may comprise a respective circumferential gear track 31a, 33a being arranged opposite of each other, such that they face each other, when the retracting assembly 3 is in the assembled state. The gear tracks 31a, 33a may be operatively engaged by means of one or more gear wheels 17. When the second retracting member 32 is driving the third retracting member 33 the rotation will be translated to the first retracting member 31 via the gear tracks 31a, 33a and the one or more gear wheels 17. Optionally, instead of using gear tracks and gear wheels the first and third retracting members 31, 33 may be rotationally engaged using a friction surface and a friction wheel. Friction surface and friction wheel shall herein be interpreted as the tracks 31a, 33a and the wheel 17 having a surface with high friction instead of teeth.

**Figure 7a** shows the engagement element 20 being in engagement with the engagement section C when the first retracting member 31 moves from the retracted positon towards the towing position and/or when the first retracting member 31 is locked in the towing position. In order to displace the first retracting member 31 from the towing position to the retracted position, the second retracting member 32 is rotated in a first direction, clockwise when seen from the perspective shown in figure 7a. This rotation of the second retracting member 32 causes the engagement element 20 to move away from the engagement section C and to move along the groove 15 without driving the first retracting member 31. When the engagement element 20 has moved half the way through the groove 15 the releasing member 21 will start to climb the cam shaped protrusion 32a. When the engagement element 20 has reached the engagement section D the releasing member 21 has reached the highest point of the cam shaped protrusion 32a and the locking member 4 will be in the fully released position, thereby allowing a rotation of the first retracting member 31. When the engagement element 20 has made contact with the engagement section D, as shown in **figure 7b****,** the first and/or the third retracting member 31, 33 will start follow the rotation of the second retracting member 32 and will rotate in the clockwise direction from the towing position to the retracted position. The angular section covered by the groove 15 corresponds to the first angular section in which the second retracting member 32 can rotate independently in relation to the first retracting member 31. The displacement of the first retracting member 31, as well as the towing hook 1 mounted thereon, from the retracted position to the towing position corresponds to the displacement from the towing position to the retracted position but is performed in a counter clockwise direction starting in the position shown in figure 7b and ending in the position shown in figure 7a. In one embodiment the second retracting member may perform a 360° rotation to perform the unlocking and movement of the towing hook 1 between the retracted and the towing position. The second retracting member 32 may be configured to rotate independently from the first retracting member 31 over the first 180° of rotation between the two engagement sections C, D. In other words, the groove 15 may span an angular sector of 180°. When the rotation starts the releasing member 21 may be pointing towards a position on the second retracting member 32 located 180° from the highest point of the cam shaped protrusion 32a. After e.g. 90° of rotation of the second retracting member 32, the releasing member 21 may reach the cam shaped protrusion 32a and will be forced to perform a translational movement in the direction of the rotation axis R from the locking position towards the releasing position. After 180° of rotation the releasing member 21 will be fully retracted in the releasing position. At the same time the engagement element 20 will engage one of the engagement sections C, D, which will cause the first and/or the third retracting member 31, 33 to follow the rotation of the second retracting member 32, which will cause the towing hook 1 to start the movement between the retracted and the towing position. This second part of the movement may in this embodiment also cover 180° of rotation around the rotation axis R, such that when the movement of the towing hook 1 between the retracted and the towing position is finished, the second retracting member 32 will have performed a 360° rotation. The releasing member 21 will at this stage be pointing towards the position on the second retracting member 32 located 180° from the highest point of the cam shaped protrusion 32a, i.e. be back at the position it was in when the rotation started.

**Figure 8** shows the locking assembly according to some embodiments herein. The locking assembly may comprise the locking member 4. The locking member 4 is arranged to perform a translatory movement along the rotation axis R between the locking position and the unlocked position. The locking assembly may further comprise a plurality of locking elements 5 being arranged to engage with two or more receiving portions 31b arranged in the first retracting member 31. The locking member 4 may press the one or more locking elements 5 outwards towards the receiving portions 31b when the locking member 4 is in the locking position. In the unlocked position the locking member 4 is displaced in the direction of the rotation axis R by means of a translatory motion such that the locking member 4 is no longer preventing the one or more locking elements 5 to move radially inwards in order to disengage from the receiving portions 31b which allows a rotation of the first retracting member around the rotation axis R. One or more first of the two or more receiving portions 31b may be arranged to receive the one or more locking elements 5 when the first retracting member 31 is in the towing position and one or more second of the two or more receiving portions 31b may be arranged to receive the one or more locking elements 5 when the first retracting member 31 is in the retracted position. In the embodiment shown in figure 8, the locking assembly comprises the same number of locking elements 5 as receiving portions 31b. Each of the receiving portions 31b has a second receiving portion 31b arranged at a 180° distance from the first one. This allows the locking elements 5 to engage the receiving portions 31b in 180° intervals. Hence, the first retracting member 31 and the tow bar 1 mounted thereon may be locked in position by the locking elements 5 in the towing position and in a retracted position in which the first retracting member 31 and the tow bar have been displaced 180° by a rotary motion. The one or more locking elements 5 may be arranged in the carrying unit 13, thereby the locking elements are secured in place during the rotation of the first retracting member 31 and the translatory movement of the locking member 4. In a further embodiment, the locking member 4 may itself be adapted to lock the rotation of the first retracting member 31, without the locking elements 5. In this embodiment the locking may be achieved by means of a form locked geometry between the outer circumference of the locking member 4 and the inner circumference of the first retracting member 31. The locking member 4 may be preloaded towards the locking position by means of the preloading element 9, such as e.g. a spring.

## Claims

1. A retractable towing hook arrangement (100) for a vehicle, said towing hook arrangement (100) comprising a towing hook (1) for being connected to an object to be towed or carried, and a retracting assembly (3) enabling said towing hook (1) to be displaced in relation to a cross beam (2) adapted for being mounted to the vehicle between a towing position and a retracted position when mounted to said vehicle,
wherein the retracting assembly (3) comprises a first retracting member (31) and a second retracting member (32), wherein the first retracting member (31) is connected to said towing hook (1), wherein the first retracting member (31) is arranged to be rotatably displaced around a rotation axis (R) in relation to the cross beam (2) between the towing position and the retracted position, and the second retracting member (32) is arranged to rotate independently from the first retracting member (31) between two engagement sections (C, D) arranged at an angular distance from each other,
wherein the retractable towing hook arrangement (100) further comprises a locking assembly being arranged to prevent a rotation of the first retracting member (31) around the rotation axis (R), wherein the second retracting member (32) is configured to release the locking assembly during a first part of a rotational movement around the rotation axis (R) in which an engagement element (20) moves between the engagement sections (C, D), to allow a rotation of the first retracting member (31) around the rotation axis (R), and to perform a rotation of the first retracting member (31) around the rotation axis (R) during a second part of the rotational movement in which the second retracting member (32) has reached one of the engagement sections (C, D) and is in operative engagement with the first retracting member (31),
wherein the first retracting member (31) comprises two or more receiving portions for receiving one or more locking elements (5), wherein one or more first receiving portions (31b) are arranged to receive the one or more locking elements (5) in the towing position and one or more second receiving portions (31b) are arranged to receive the one or more locking elements (5) in the retracted position, and wherein the one or more locking elements (5) are released from engagement with the first retracting member (31) when the locking member (4) is in the releasing position, wherein the locking assembly comprises a locking member (4) being arranged to perform a translational movement along the rotation axis (R) between a locking position and a releasing position, wherein the locking member (4), is adapted to prevent a rotational movement of the first retracting member (31) around the rotation axis in the locking position,
wherein the retractable towing hook arrangement further comprises a carrying unit (13) being fixedly arranged to the cross beam (2), wherein the first retracting member (31) is rotatably arranged to the carrying unit (13), and
**characterized in that**
the carrying unit (13) is further configured to carry the one or more locking elements (5) and to receive the locking member (4), such that the locking elements (5) are movably arranged in a radial and axial direction to engage the first retracting member (31) when the locking member (4) is in the locking position and to disengage the first retracting member (31) when the locking member (4) is in the releasing position.

2. The retractable towing hook arrangement according to claim 1, wherein the retractable towing hook arrangement further comprises a releasing member (21), being arranged on the locking member (4) and in sliding contact with a surface of the second retracting member (32), the surface extending in a plane perpendicular to the rotation axis (R), wherein the surface of the second retracting member (32) comprises a cam shaped protrusion (32a), and wherein the cam shaped protrusion (32a) is arranged such that a rotation of the second retracting member (32) relative to the first retracting member (31) between the two engagement sections (C, D) causes the releasing member (21) to slide over the cam shaped protrusion (32a) of the second retracting member (32) causing it to perform a translational movement along the rotation axis, thereby moving the locking member (4) from the locking position to the releasing position.

3. The retractable towing hook arrangement according to claim 2, wherein when the engagement element (20) of the second retracting member (32) has reached one of the engagement sections (C, D) connected to the first retracting member (31) and engages with the one of the engagement sections (C, D), the first retracting member (31) is unlocked and follows the rotation of the second retracting member (32) thereby displacing the first retracting member (31) between the towing position and the retracted position.

4. The retractable towing hook arrangement according to any of the previous claims, wherein the second retracting member (32) comprises the engagement element (20) and the first retracting member (31) is operatively connected to two engagement sections (C, D) arranged at the angular distance from each other, or the second retracting member (32) comprises two engagement sections (C, D) arranged at the angular distance from each other and the first retracting member (31) is operatively connected to the engagement element (20), wherein the engagement element (20) is arranged to engage either one of the two engagement sections (C, D) in order to drive the first retracting member (31).

5. The retractable towing hook arrangement according to any of the claims 1 to 4, wherein the retracting assembly (3) comprises a third retracting member (33) being rotationally engaged with the first retracting member (31), and wherein the engagement sections (C, D) or the engagement element (20) being operatively connected to the first retracting member (31) are arranged on the third retracting member (33), the third retracting member being arranged to engage with the second retracting member (32), such that when the second retracting member (32) engages with the third retracting member (33) the second retracting member (32) drives the first retracting member (31) via the third retracting member (33).

6. The retractable towing hook arrangement according to claim 5, wherein the first and the third retracting members (31, 33) are rotationally engaged using a gear wheel (17).

7. The retractable towing hook arrangement according to claim 5 or 6, wherein the first and the third retracting members (31, 33) each comprise a circumferential gear track (31a, 33a) arranged on a respective surface of the first and the third retracting members (31, 33), such that the gear tracks (31a, 33a) of the respective surfaces of the first and third retracting members (31, 33) face each other, and wherein the retracting assembly (3) further comprises one or more gear wheels (17) being in engagement with the respective gear track of the first and the third retracting members (31, 33), such that a rotation of the third retracting member (33) is translated to the first retracting member (31) via the gear tracks (31a, 33a) and the one or more gearwheels (17).

8. The retractable towing hook arrangement according to any of the previous claims, wherein the engagement element (20) is a pin protruding from one of the retracting members (31, 32, 33) in a direction parallel to the rotation axis (R), wherein the pin (20) is arranged to engage into a groove (15) arranged on an retracting member (31, 32, 33) arranged opposite of the retracting member (31, 32, 33) comprising the pin, wherein the groove (15) extends partly circumferentially over a first circle sector and wherein the end sections of the groove (15) constitute the engagement sections (C, D), such that the pin (20) is arranged to move along the groove (15) between a first and a second end section (C, D) of the groove (15) when the second retracting member (32) is rotated without driving the first retracting member (31) and drivingly engage the first retracting member (31) when the pin (20) reaches the first or the second end section (C, D) of the groove (15).

9. The retractable towing hook arrangement according to the previous claims, wherein the locking member (4) is preloaded towards the locking position.

10. The retractable towing hook arrangement according to any of the previous claims, wherein the retracting assembly (3) comprises an actuator (14) for performing the rotational movement of the second retracting member (32).

11. The retractable towing hook arrangement according to any of the previous claims, wherein the one or more locking elements (5) are arranged at an angle (α_{LE}) to the rotation axis (R), such that the one or more locking elements (5) move both in a direction of the rotation axis (R) and radially outwards from the rotation axis (R), when the one or more locking elements (5) are displaced by means of the locking member (4).

12. The retractable towing hook arrangement according to claim 11, wherein the locking member (4) has a wedge shaped section and the locking elements (5) have a cylindrical shape with a centre axis extending at the angle (α_{LE}) to the rotation axis (R), such that the centre axis extends in parallel with a circumferential surface of the wedge shaped section of the locking member (4).

13. A vehicle comprising the retractable towing hook arrangement according to any of the claims 1 to 12.

14. The vehicle according to claim 13, wherein the retracting assembly is positioned at an angle to a longitudinal plane of the vehicle between 1 and 90 degrees.

## Patentansprüche

1. Einziehbare Zughakenanordnung (100) für ein Fahrzeug, die Zughakenanordnung (100) umfassend einen Zughaken (1), um mit einem abzuschleppenden oder zu tragenden Objekt verbunden zu werden, und eine Einzugsbaugruppe (3), die es dem Zughaken (1) ermöglicht, in Bezug auf einen Querträger (2), der angepasst ist, um an dem Fahrzeug zwischen einer Abschleppposition und einer eingezogenen Position montiert zu werden, wenn sie an dem Fahrzeug montiert ist, verschoben zu werden,
wobei die Einzugsbaugruppe (3) ein erstes Einzugselement (31) und ein zweites Einzugselement (32) umfasst, wobei das erste Einzugselement (31) mit dem Zughaken (1) verbunden ist, wobei das erste Einzugselement (31) angeordnet ist, um um eine Drehachse (R) herum in Bezug auf den Querträger (2) zwischen der Abschleppposition und der eingezogenen Position drehbar verschoben zu werden, und das zweite Einzugselement (32) angeordnet ist, um sich unabhängig von dem ersten Einzugselement (31) zwischen zwei Eingriffsabschnitten (C, D), die in einem Winkelabstand voneinander angeordnet sind, zu drehen,
wobei die einziehbare Zughakenanordnung (100) ferner eine Verriegelungsbaugruppe umfasst, die angeordnet ist, um eine Drehung des ersten Einzugselements (31) um die Drehachse (R) herum zu verhindern, wobei das zweite Einzugselement (32) konfiguriert ist, um die Verriegelungsbaugruppe während eines ersten Teils einer Drehbewegung um die Drehachse (R) herum freizugeben, in der sich ein Eingriffsbestandteil (20) zwischen den Eingriffsabschnitten (C, D) bewegt, um eine Drehung des ersten Einzugselements (31) um die Drehachse (R) herum zu ermöglichen, und um eine Drehung des ersten Einzugselements (31) um die Drehachse (R) herum während eines zweiten Teils der Drehbewegung durchzuführen, in der das zweite Einzugselement (32) einen der Eingriffsabschnitte (C, D) erreicht hat und mit dem ersten Einzugselement (31) in Wirkeingriff steht,
wobei das erste Einzugselement (31) zwei oder mehr Aufnahmeanteile zum Aufnehmen eines oder mehrerer Verriegelungsbestandteile (5) umfasst, wobei ein oder mehrere erste Aufnahmeanteile (31b) angeordnet sind, um den einen oder die mehreren Verriegelungsbestandteile (5) in der Abschleppposition aufzunehmen, und ein oder mehrere zweite Aufnahmeanteile (31b) angeordnet sind, um den einen oder die mehreren Verriegelungsbestandteile (5) in der eingefahrenen Position aufzunehmen, und wobei der eine oder die mehreren Verriegelungsbestandteile (5) aus dem Eingriff mit dem ersten Einzugselement (31) freigegeben sind, wenn das Verriegelungselement (4) in der Freigabeposition ist, wobei die Verriegelungsanordnung ein Verriegelungselement (4) umfasst, das angeordnet ist, um eine Translationsbewegung entlang der Drehachse (R) zwischen einer Verriegelungsposition und einer Freigabeposition durchzuführen, wobei das Verriegelungselement (4) angepasst ist, um eine Drehbewegung des ersten Einzugselements (31) um die Drehachse herum in der Verriegelungsposition zu verhindern,
wobei die einziehbare Zughakenanordnung ferner eine Trageinheit (13) umfasst, die an dem Querträger (2) fest angeordnet ist, wobei das erste Einzugselement (31) an der Trageinheit (13) drehbar angeordnet ist, und
**dadurch gekennzeichnet, dass**
die Trageinheit (13) ferner konfiguriert ist, um den einen oder die mehreren Verriegelungsbestandteile (5) zu tragen und das Verriegelungselement (4) derart aufzunehmen, dass die Verriegelungsbestandteile (5) in einer radialen und axialen Richtung beweglich angeordnet sind, um das erste Einzugselement (31) in Eingriff zu nehmen, wenn das Verriegelungselement (4) in der Verriegelungsposition ist, und um das erste Einzugselement (31) zu lösen, wenn das Verriegelungselement (4) in der Freigabeposition ist.

2. Einziehbare Zughakenanordnung nach Anspruch 1, wobei die einziehbare Zughakenanordnung ferner ein Freigabeelement (21) umfasst, das an dem Verriegelungselement (4) und in Gleitkontakt mit einer Oberfläche des zweiten Einzugselements (32) angeordnet ist, wobei sich die Oberfläche in einer Ebene senkrecht zu der Drehachse (R) erstreckt, wobei die Oberfläche des zweiten Einzugselements (32) einen nockenförmigen Vorsprung (32a) umfasst, und wobei der nockenförmige Vorsprung (32a) derart angeordnet ist, dass eine Drehung des zweiten Einzugselements (32) relativ zu dem ersten Einzugselement (31) zwischen den zwei Eingriffsabschnitten (C, D) bewirkt, dass das Freigabeelement (21) über den nockenförmigen Vorsprung (32a) des zweiten Einzugselements (32) gleitet, wodurch bewirkt wird, dass es eine Translationsbewegung entlang der Drehachse durchführt, wobei dadurch das Verriegelungselement (4) aus der Verriegelungsposition in die Freigabeposition bewegt wird.

3. Einziehbare Zughakenanordnung nach Anspruch 2, wobei, wenn das Eingriffselement (20) des zweiten Einzugselements (32) einen der Eingriffsabschnitte (C, D) erreicht hat, die mit dem ersten Einzugselement (31) verbunden sind und den einen der Eingriffsabschnitte (C, D) in Eingriff nimmt, das erste Einzugselement (31) entriegelt ist und der Drehung des zweiten Einzugselements (32) folgt, wobei dadurch das erste Einzugselement (31) zwischen der Abschleppposition und der eingezogenen Position verschoben wird.

4. Einziehbare Zughakenanordnung nach einem der vorstehenden Ansprüche, wobei das zweite Einzugselement (32) das Eingriffselement (20) umfasst und das erste Einzugselement (31) mit zwei Eingriffsabschnitten (C, D), die in dem Winkelabstand voneinander angeordnet sind, wirkverbunden ist, oder das zweite Einzugselement (32) zwei Eingriffsabschnitte (C, D) umfasst, die in dem Winkelabstand voneinander angeordnet sind, und das erste Einzugselement (31) mit dem Eingriffselement (20) wirkverbunden ist, wobei das Eingriffselement (20) angeordnet ist, um einen der zwei Eingriffsabschnitte (C, D) in Eingriff zu nehmen, um das erste Einzugselement (31) anzutreiben.

5. Einziehbare Zughakenanordnung nach einem der Ansprüche 1 bis 4, wobei die Einzugsbaugruppe (3) ein drittes Einzugselement (33) umfasst, das mit dem ersten Einzugselement (31) drehbar in Eingriff steht, und wobei die Eingriffsabschnitte (C, D) oder das Eingriffselement (20), die mit dem ersten Einzugselement (31) wirkverbunden sind, an dem dritten Einzugselement (33) angeordnet sind, wobei das dritte Einzugselement angeordnet ist, um mit dem zweiten Einzugselement (32) derart in Eingriff zu stehen, dass, wenn das zweite Einzugselement (32) das dritte Einzugselement (33) in Eingriff nimmt, das zweite Einzugselement (32) das erste Einzugselement (31) über das dritte Einzugselement (33) antreibt.

6. Einziehbare Zughakenanordnung nach Anspruch 5, wobei das erste und das dritte Einzugselement (31, 33) unter Verwendung eines Zahnrads (17) drehbar in Eingriff stehen.

7. Einziehbare Zughakenanordnung nach Anspruch 5 oder 6, wobei das erste und das dritte Einzugselement (31,33) jeweils eine Umfangszahnradbahn (31a, 33a) umfassen, die auf einer jeweiligen Oberfläche des ersten und des dritten Einzugselements (31, 33) derart angeordnet ist, dass die Zahnräder (31a, 33a) der jeweiligen Oberflächen des ersten und dritten des Einzugselements (31, 33) einander zugewandt sind, und wobei die Einzugsbaugruppe (3) ferner ein oder mehrere Zahnräder umfasst, die mit der jeweiligen Zahnradbahn des ersten und des dritten Einzugselements (31, 33) derart in Eingriff stehen, dass eine Drehung des dritten Einzugselements (33) über die Zahnradbahnen (31a, 33a) und das eine oder die mehreren Zahnräder (17) in das erste Einzugselement (31) translatiert wird.

8. Einziehbare Zughakenanordnung nach einem der vorstehenden Ansprüche, wobei der Eingriffsbestandteil (20) ein Stift ist, der von einem der Einzugselemente (31, 32, 33) in einer Richtung parallel zu der Drehachse (R) vorspringt, wobei der Stift (20) angeordnet ist, um eine Nut (15) in Eingriff zu nehmen, die an einem Einzugselement (31, 32, 33) angeordnet ist, das gegenüber des Einzugselements (31, 32, 33), umfassend den Stift, angeordnet ist, wobei sich die Nut (15) teilweise in Umfangsrichtung über einen ersten Kreissektor erstreckt und wobei die Endabschnitte der Nut (15) die Eingriffsabschnitte (C, D) derart ausmachen, dass der Stift (20) angeordnet ist, um sich entlang der Nut (15) zwischen einem ersten und einem zweiten Endabschnitt (C, D) der Nut (15) zu bewegen, wenn das zweite Einzugselement (32) gedreht wird, ohne das erste Einzugselement (31) anzutreiben und das erste Einzugselement (31) antreibbar in Eingriff zu nehmen, wenn der Stift (20) den ersten oder den zweiten Endabschnitt (C, D) der Nut (15) erreicht.

9. Einziehbare Zughakenanordnung nach den vorstehenden Ansprüchen, wobei das Verriegelungselement (4) zu der Verriegelungsposition hin vorgespannt ist.

10. Einziehbare Zughakenanordnung nach einem der vorstehenden Ansprüche, wobei die Einzugsbaugruppe (3) einen Aktuator (14) zum Durchführen der Drehbewegung des zweiten Einzugselements (32) umfasst.

11. Einziehbare Zughakenanordnung nach einem der vorstehenden Ansprüche, wobei das eine oder die mehreren Verriegelungselemente (5) in einem Winkel (α_{LE}) zu der Drehachse (R) derart angeordnet sind, dass sich das eine oder die mehreren Verriegelungselemente (5) sowohl in einer Richtung der Drehachse (R) als auch radial nach außen von der Drehachse (R) bewegen, wenn das eine oder die mehreren Verriegelungselemente (5) mittels des Verriegelungselements (4) verschoben werden.

12. Einziehbare Zughakenanordnung nach Anspruch 11, wobei das Verriegelungselement (4) einen keilförmigen Abschnitt aufweist und die Verriegelungsbestandteile (5) eine zylindrische Form mit einer Mittelachse aufweisen, die sich in dem Winkel (α_{LE}) zu der Drehachse (R) derart erstreckt, dass sich die Mittelachse parallel zu einer Umfangsoberfläche des keilförmigen Abschnitts des Verriegelungselements (4) erstreckt.

13. Fahrzeug, umfassend die einziehbare Zughakenanordnung nach einem der Ansprüche 1 bis 12.

14. Fahrzeug nach Anspruch 13, wobei die Einzugsbaugruppe in einem Winkel zu einer Längsebene des Fahrzeugs zwischen 1 und 90 Grad positioniert ist.

## Revendications

1. Agencement de crochet d'attelage rétractable (100) destiné à un véhicule, ledit agencement de crochet d'attelage (100) comprenant un crochet d'attelage (1) destiné à être relié à un objet à être attelé ou transporté, et un ensemble de rétraction (3) permettant audit crochet d'attelage (1) d'être déplacé relativement à une poutre transversale (2) adaptée pour être montée sur le véhicule entre une position d'attelage et une position rétractée lorsqu'elle est montée sur ledit véhicule,
dans lequel l'ensemble de rétraction (3) comprend un premier organe de rétraction (31) et un deuxième organe de rétraction (32), dans lequel le premier organe de rétraction (31) est relié audit crochet d'attelage (1), dans lequel le premier organe de rétraction (31) est agencé pour être déplacé de manière rotative autour d'un axe de rotation (R) relativement à la poutre transversale (2) entre la position d'attelage et la position rétractée, et le deuxième organe de rétraction (32) est agencé pour tourner indépendamment du premier organe de rétraction (31) entre deux sections de mise en prise (C, D) agencées à une distance angulaire l'une de l'autre,
dans lequel l'agencement de crochet d'attelage rétractable (100) comprend en outre un ensemble de verrouillage étant agencé pour empêcher une rotation du premier organe de rétraction (31) autour de l'axe de rotation (R), dans lequel le deuxième organe de rétraction (32) est configuré pour libérer l'ensemble de verrouillage pendant une première partie d'un mouvement rotationnel autour de l'axe de rotation (R) où un élément de mise en prise (20) est en mouvement entre les sections de mise en prise (C, D), pour permettre une rotation du premier organe de rétraction (31) autour de l'axe de rotation (R), et pour effectuer une rotation du premier organe de rétraction (31) autour de l'axe de rotation (R) pendant une seconde partie du mouvement rotationnel où le deuxième organe de rétraction (32) a atteint l'une des sections de mise en prise (C, D) et est mis en prise fonctionnelle avec le premier organe de rétraction (31),
dans lequel le premier organe de rétraction (31) comprend deux ou plusieurs portions de réception destinées à recevoir un ou plusieurs éléments de verrouillage (5), dans lequel une ou plusieurs premières portions de réception (31b) sont agencées pour recevoir l'un ou plusieurs éléments de verrouillage (5) dans la position d'attelage et une ou plusieurs secondes portions de réception (31b) sont agencées pour recevoir l'un ou plusieurs éléments de verrouillage (5) dans la position rétractée, et dans lequel l'un ou plusieurs éléments de verrouillage (5) sont libérés d'une mise en prise avec le premier organe de rétraction (31) lorsque l'organe de verrouillage (4) est dans la position de libération, dans lequel l'ensemble de verrouillage comprend un organe de verrouillage (4) étant agencé pour effectuer un mouvement translationnel le long de l'axe de rotation (R) entre une position de verrouillage et une position de libération, dans lequel l'organe de verrouillage (4), est adapté pour empêcher un mouvement rotationnel du premier organe de rétraction (31) autour de l'axe de rotation dans la position de verrouillage,
dans lequel l'agencement de crochet d'attelage rétractable comprend en outre une unité de transport (13) étant agencée de manière fixe sur la poutre traversante (2), dans lequel le premier organe de rétraction (31) est agencé de manière rotative sur l'unité de transport (13), et
**caractérisé en ce que**
l'unité de transport (13) est en outre conçue pour transporter l'un ou plusieurs éléments de verrouillage (5) et pour recevoir l'élément de verrouillage (4), de telle sorte que les éléments de verrouillage (5) sont agencés de manière mobile dans une direction radiale et axiale pour mettre en prise le premier élément de rétraction (31) lorsque l'organe de verrouillage (4) est dans la position de verrouillage et pour désengager le premier élément de rétraction (31) lorsque l'organe de verrouillage (4) est dans la position de libération.

2. Agencement de crochet d'attelage rétractable selon la revendication 1, dans lequel l'agencement de crochet d'attelage rétractable comprend en outre un organe de libération (21), étant agencé sur l'organe de verrouillage (4) et en contact coulissant avec une surface du deuxième organe de rétraction (32), la surface s'étendant dans un plan perpendiculaire à l'axe de rotation (R), dans lequel la surface du deuxième organe de rétraction (32) comprend une saillie en forme de came (32a), et dans lequel la saillie en forme de came (32a) est agencée de telle sorte qu'une rotation du deuxième organe de rétraction (32) relativement au premier organe de rétraction (31) entre les deux sections de mise en prise (C, D) amène l'organe de libération (21) à coulisser sur la saillie en forme de came (32a) du deuxième organe de rétraction (32) l'amenant à effectuer un mouvement translationnel le long de l'axe de rotation, mettant de ce fait en mouvement l'organe de verrouillage (4) de la position de verrouillage à la position de libération.

3. Agencement de crochet d'attelage rétractable selon la revendication 2, dans lequel lorsque l'élément de mise en prise (20) du deuxième organe de rétraction (32) a atteint l'une des sections de mise en prise (C, D) reliées au premier organe de rétraction (31) et vient en prise avec l'une des sections de mise en prise (C, D), le premier organe de rétraction (31) est déverrouillé et suit la rotation du deuxième organe de rétraction (32) déplaçant de ce fait le premier organe de rétraction (31) entre la position d'attelage et la position rétractée.

4. Agencement de crochet d'attelage rétractable selon l'une quelconque des revendications précédentes, dans lequel le deuxième organe de rétraction (32) comprend l'élément de mise en prise (20) et le premier organe de rétraction (31) est relié de manière fonctionnelle à deux sections de mise en prise (C, D) agencées à la distance angulaire l'une de l'autre, ou le deuxième organe de rétraction (32) comprend deux sections de mise en prise (C, D) agencées à la distance angulaire l'une de l'autre et le premier organe de rétraction (31) est relié de manière fonctionnelle à l'élément de mise en prise (20), dans lequel l'élément de mise en prise (20) est agencé pour venir en prise avec l'une ou l'autre des deux sections de mise en prise (C, D) afin d'entraîner le premier organe de rétraction (31).

5. Agencement de crochet d'attelage rétractable selon l'une quelconque des revendications 1 à 4, dans lequel l'ensemble de rétraction (3) comprend un troisième organe de rétraction (33) étant mis en prise de manière rotationnelle avec le premier organe de rétraction (31), et dans lequel les sections de mise en prise (C, D) ou l'élément de mise en prise (20) étant reliés de manière fonctionnelle au premier organe de rétraction (31) sont agencés sur le troisième organe de rétraction (33), le troisième organe de rétraction étant agencé pour venir en prise avec le deuxième organe de rétraction (32), de telle sorte que lorsque le deuxième organe de rétraction (32) vient en prise avec le troisième organe de rétraction (33) le deuxième organe de rétraction (32) entraîne le premier organe de rétraction (31) par le biais du troisième organe de rétraction (33).

6. Agencement de crochet d'attelage rétractable selon la revendication 5, dans lequel les premier et troisième organes de rétraction (31, 33) sont mis en prise de manière rotationnelle à l'aide d'une roue dentée (17).

7. Agencement de crochet d'attelage rétractable selon la revendication 5 ou 6, dans lequel les premier et troisième organes de rétraction (31, 33) comprennent chacun une piste d'engrenage circonférentiel (31a, 33a) agencée sur une surface respective des premier et troisième organes de rétraction (31, 33), de telle sorte que les pistes d'engrenage (31a, 33a) des surfaces respectives des premier et troisième organes de rétraction (31, 33) se font face l'une l'autre, et dans lequel l'ensemble de rétraction (3) comprend en outre une ou plusieurs roues d'engrenage (17) étant mises en prise avec la piste d'engrenage respective des premier et troisième organes de rétraction (31, 33), de telle sorte qu'une rotation du troisième organe de rétraction (33) est transmise au premier organe de rétraction (31) par le biais des pistes d'engrenage (31a, 33a) et de l'une ou plusieurs roues d'engrenage (17).

8. Agencement de crochet de remorquage rétractable selon l'une quelconque des revendications précédentes, dans lequel l'élément de mise en prise (20) est une goupille faisant saillie à partir de l'un des organes de rétraction (31, 32, 33) dans une direction parallèle à l'axe de rotation (R), dans lequel la goupille (20) est agencée pour venir en prise dans une rainure (15) agencée sur un organe de rétraction (31, 32, 33) agencé à l'opposé de l'organe de rétraction (31, 32, 33) comprenant la goupille, dans lequel la rainure (15) s'étend partiellement de manière circonférentielle sur un premier secteur de cercle et dans lequel les sections d'extrémité de la rainure (15) constituent les sections de mise en prise (C, D), de telle sorte que la goupille (20) est agencée pour être en mouvement le long de la rainure (15) entre une première et une seconde section d'extrémité (C, D) de la rainure (15) lorsque le deuxième organe de rétraction (32) est mis en rotation sans entraîner le premier organe de rétraction (31) et vient en prise par entraînement avec le premier organe de rétraction (31) lorsque la goupille (20) atteint la première ou la seconde section d'extrémité (C, D) de la rainure (15).

9. Agencement de crochet d'attelage rétractable selon les revendications précédentes, dans lequel l'organe de verrouillage (4) est précontraint vers la position de verrouillage.

10. Agencement de crochet d'attelage rétractable selon l'une quelconque des revendications précédentes, dans lequel l'ensemble de rétraction (3) comprend un actionneur (14) destiné à effectuer le mouvement rotationnel du deuxième organe de rétraction (32).

11. Agencement de crochet de remorquage rétractable selon l'une quelconque des revendications précédentes, dans lequel l'un ou plusieurs éléments de verrouillage (5) sont agencés selon un angle (α_{LE}) par rapport à l'axe de rotation (R), de telle sorte que l'un ou plusieurs éléments de verrouillage (5) sont en mouvement à la fois dans une direction de l'axe de rotation (R) et radialement vers l'extérieur à partir de l'axe de rotation (R), lorsque l'un ou plusieurs éléments de verrouillage (5) sont déplacés au moyen de l'organe de verrouillage (4).

12. Agencement de crochet d'attelage rétractable selon la revendication 11, dans lequel l'organe de verrouillage (4) a une section en forme de coin et les éléments de verrouillage (5) ont une forme cylindrique avec un axe central s'étendant selon l'angle (α_{LE}) par rapport à l'axe de rotation (R), de telle sorte que l'axe central s'étend en parallèle avec une surface circonférentielle de la section en forme de coin de l'organe de verrouillage (4).

13. Véhicule comprenant l'agencement de crochet d'attelage rétractable selon l'une quelconque des revendications 1 à 12.

14. Véhicule selon la revendication 13, dans lequel l'ensemble de rétraction est positionné à un angle par rapport à un plan longitudinal du véhicule entre 1 et 90 degrés.
